# NEUE EUROPÄISCHE PATENTSCHRIFT

(11) **EP 0 808 756 B2**
(45) Veröffentlichungstag und Bekanntmachung des Hinweises auf die Entscheidung über den Einspruch: **18.11.2009**
(45) Hinweis auf die Patenterteilung: 25.07.2001
(21) Anmeldenummer: 97104970.5
(22) Anmeldetag: 24.03.1997
(51) Int. Cl.: B60T 17/00, B01D 53/26

(54) **Luftaufbereitungsanordnung für Druckluft, insbesondere für pneumatische Bremsanlagen von Kraftfahrzeugen**
Air treatment system for compressed air, in particular for pneumatic brake systems of vehicles
Système pour le traitement d'air, en particulier pour systèmes de freinage pneumatique de véhicules

(30) Priorität: 23.05.1996 DE 19620851
(43) Veröffentlichungstag der Anmeldung: 26.11.1997
(73) Patentinhaber: KNORR-BREMSE Systeme für Nutzfahrzeuge GmbH, 80809 München (DE)
(72) Erfinder: Bassi, Marco, 80809 München (DE)
(74) Vertreter: von Bülow, Tam

(56) Entgegenhaltungen:
- EP-A- 0 212 101
- EP-B2- 0 093 253
- WO-A-91/16224
- DE-A- 3 139 682
- DE-A- 3 231 519
- DE-A- 19 515 895
- DE-A1- 1 811 239
- DE-A1- 3 112 144
- DE-C2- 3 006 584
- DE-C2- 3 542 788

## Beschreibung

Die Erfindung bezieht sich auf eine Luftaufbereitungsanordnung gemäß dem Oberbegriff des Patentanspruches 1.

Eine derartige Luftaufbereitungsanordnung ist aus der WO-A-91/16224 bekannt. Bei dieser Luftaufbereitungsanordnung strömt von einem Kompressor gelieferte Druckluft über einen Lufttrockner in einen Druckluftspeicher, wobei der Lufttrockner mit gespeicherter trockener Luft regeneriert wird. Die Steuerung der Regenerierungszyklen erfolgt in Abhängigkeit von der im Druckluftspeicher herrschenden Luftfeuchtigkeit. Ferner ist ein Drucksensor vorgesehen, der bei Unterschreiten eines Mindestdrucks im Druckspeicher den Regenerierungszyklus unterbricht.

Aus der DE 31 39 682 A1 ist eine Luftaufbereitungsanlage bekannt, bei der der Lufttrockner mit trockener Regenerationsluft im Gegenstrom regeneriert wird. Die Regenerierung beginnt, wenn im Vorratsbehälter ein vorgegebener Maximaldruck erreicht wird, und die Regenerierungsdauer wird durch eine elektronische Steuereinrichtung gesteuert.

Aus "Kraftfahrtechnisches Taschenbuch" der Firma Robert Bosch GmbH, Stuttgart, 21. Auflage, 1991, Seite 635 ist eine Luftaufbereitungsanordnung bekannt, die im wesentlichen aus einem Kompressor und einem Lufttrockner mit einer Trockenmittelbox und einem Gehäuse besteht, in dem sich neben der Luftdurchführung ein Entlüftungsventil und ein Anschluß zu einem Regenerationsluftbehälter befindet.
Die DE-OS-1 811 239 zeigt eine Luftaufbereitungsanordnung gemäß dem Oberbegriff des Anspruches 1.

Bei geschlossenem Entlüftungsventil strömt die vom Luftkompressor kommende Druckluft durch die Trockenmittelbox und von dort zu dem Bremssystem, insbesondere zu Vorratsluft-behältern. Gleichzeitig wird der Regenerationsluftbehälter mit ca. 4-6 Liter Volumen mit getrockner Druckluft gefüllt. Beim Durchströmen der Trockenmittelbox wird der feuchten Druckluft durch Kondensation und Absorbtion Wasser entzogen. Die Trockenmittelbox enthält ein Granulat mit begrenzter Wasseraufnahmekapazität und muß deshalb in bestimmten Zeitabständen regeneriert werden. In einem Umkehrprozeß entspannt sich trockene Druckluft aus dem Regenerationsluftbehälter über eine Regenerationsdrossel auf Atmosphärendruck, durchströmt im Gegenstrom das feuchte Granulat, entzieht diesem die Feuchtigkeit und strömt als feuchte Luft über das geöffnete Entlüftungsventil ins Freie. Als nachteilig bei dieser Anordnung wird angesehen, daß das Regenerieren in fest vorgegebenen Zeitabständen und mit einem fest vorgegebenen Volumen, nämlich dem Volumen des Regenerationsluftbehälters, durchgeführt wird, selbst dann, wenn an sich eine Regeneration noch gar nicht nötig ist, da die Wasseraufnahmekapazität des Lufttrockners noch nicht erschöpft ist. Hierdurch wird oftmals ein unnötig hoher Luftverbrauch verursacht.

Aufgabe der Erfindung ist es, die bekannte Luftaufbereitungsanordnung dahingehend zu verbessern, daß sie bei einfacherem Aufbau einen geringeren Luftverbrauch hat und ein Regenerieren des Lufttrockners nur dann stattfindet, wenn es wirklich erforderlich ist.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung besteht darin, daß der tatsächliche Luftverbrauch gemessen wird und aus dem tatsächlichen Luftverbrauch Zeitpunkt und Luftmenge für das Regenerieren ermittelt werden und die zum Regenerieren notwendige Luft aus der Bremsanlage den Lufttrockner im Gegenstrom durchläuft, um diesen zu regenerieren.

Damit erreicht man folgende Vorteile:

Der bisher benötigte Regenerationsluftbehälter und dessen pneumatische Leitungen werden eingespart; der Zeitpunkt des Regenerierens kann flexibler gewählt werden; es kann auch eine Teilregeneration durchgeführt werden; die Luftmenge zum Regenerieren und damit der gesamte Luftverbrauch der Anlage wird reduziert. Der Lufttrockner selbst kann kleiner dimensioniert werden und hat eine längere Lebensdauer; die Luftaufbereitungsanordnung ist flexibel an unterschiedliche Fahrzeugtypen und insbesondere deren Luftvolumina anpaßbar. Die bei manchen Lufttrocknungsanlagen nach jedem Abtrennen des Kompressors durchgeführte Regeneration ist unnötig, da die Funktionen Abtrennen des Kompressors und Regeneration voneinander entkoppelt sind.

Nach der Erfindung wird der Luftverbrauch durch einen Druck/Spannungs-Wandler, der an eine Druckmittelleitung angeschlossen ist, in Zusammenwirken mit einer elektronischen Steuerung gemessen. Aus dem Druckverlauf (zeitliche Druckänderung) kann nämlich bei bekannten Volumina der Druckleitungen und Druckbehälter das Volumen der vom Kompressor nachgespeisten und damit durch den Lufttrockner geflossenen Luft ermittelt werden.

Nach einer Ausgestaltung der Erfindung ist ein elektrisch steuerbares Magnetventil vorgesehen, das ein in Strömungsrichtung vom Lufttrockner zur Druckmittelleitung liegendes Rückschlagventil überbrückt. Ist dieses Ventil aktiviert, so öffnet es eine ansonsten gesperrte Verbindung von der Druckmittelleitung zum Ausgang des Lufttrockners, so daß Druckluft in Gegenstromrichtung den Lufttrockner regeneriert.

Nach einer weiteren Ausgestaltung der Erfindung ist in dem Rückstromweg von der Druckleitung zum Lufttrockner ein Rückschlagventil angeordnet, das durch Regenerationsluft geöffnet wird; weiter ist an den Ausgang des Magnetventiles ein Doppelrückschlagventil angeschlossen, das Regenerationsluft zu einem Steuereingang eines zwischen dem Kompressor und dem Lufttrockner geschalteten Ventiles liefert, welches in aktiviertem Zustand die Druckluftleitung absperrt und gleichzeitig den Ausgang des Kompressors mit Atmosphäre verbindet. Damit wird erreicht, daß während des Regenerierens keine Luft vom Kompressor nachgespeist wird.

Nach einer Weiterbildung der Erfindung ist zwischen die Druckleitung und einem zweiten Eingang des Doppelrückschlagventiles ein von der elektronischen Steuerung angesteuertes Magnetventil geschaltet, das im aktivierten Zustand die Druckluftleitung mit dem zweiten Eingang des Doppelrückschlagventiles verbindet und damit Druckluft zum Steuereingang des zwischen dem Kompressor und dem Lufttrockner liegenden Ventiles liefert und dieses aktiviert. Damit wird ein Nachspeisen von Druckluft aus dem Kompressor zu dem Druckluftsystem unterbunden ohne daß gleichzeitig ein Regenerieren ausgelöst wird.

Weitere Einzelheiten und Vorteile der Erfindung sind der nachfolgenden Beschreibung zu entnehmen.

Im folgenden wird die Erfindung anhand eines Ausführungsbeispieles im Zusammenhang mit der Zeichnung beschrieben. Es zeigt:

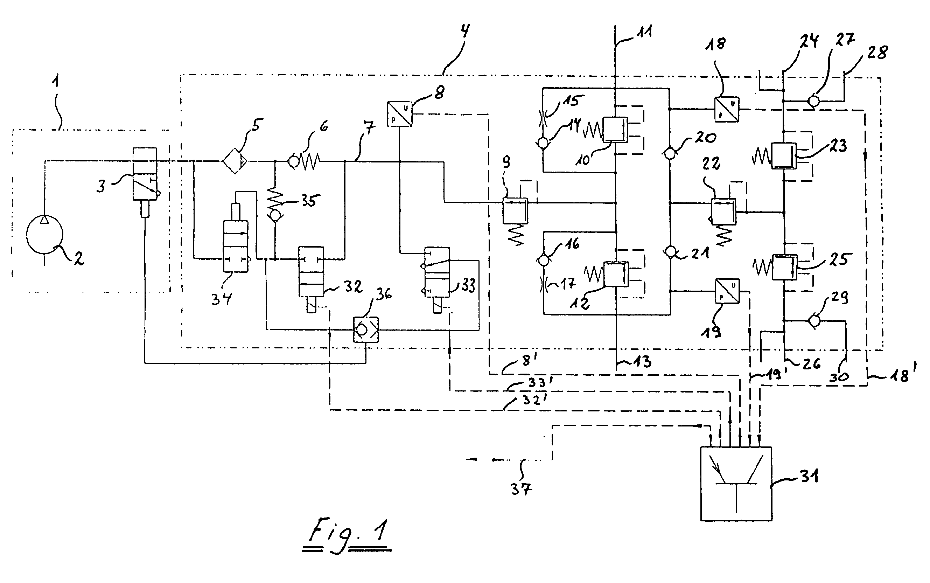

- Fig. 1: Eine Prinzipskizze der Luftaufbereitungsanordnung nach der Erfindung.

Ein Drucklufterzeuger 1, der als separate Einheit ausgebildet ist, enthält einen Kompressor 2 und ein Entlüftungsventil 3, welches die von dem Kompressor 2 gelieferte Druckluft wahlweise entweder zu einer Luftaufbereitungsanordnung 4 liefert oder zur Atmosphäre hin entlüftet. Im konkret dargestellten Ausführungsbeispiel ist das Entlüftungsventil 3 pneumatisch gesteuert. In der in Fig. 1 dargestellten Ruhestellung des Entlüftungsventils 3 wird die Druckluft zu der Luftaufbereitungsanordnung 4 geliefert und durchströmt eine Lufttrockner- und Filterpatrone 5 (im folgenden nur noch Lufttrockner genannt) und gelangt von dort über ein Rückschlagventil 6 auf eine Druckluftleitung 7. Der Druck in dieser Leitung wird von einem Druck/Spannungs-Wandler 8 laufend überwacht und über eine elektrische Leitung 8' einer elektronischen Steuerung 31 gemeldet. Der Druck/-Spannungs-Wandler 8 hat in Zusammenwirken mit der elektronischen Steuerung 31 die Funktion eines Durchflußmessers, der die vom Kompressor an das Bremssystem gelieferte Luftmenge mißt.

Die Druckluft in der pneumatischen Leitung 7 gelangt über einen Druckregler bzw. Druckbegrenzer 9 zu einer Leitungsverzweigung in Form eines T-Stückes und von dort über einen weiteren Druckregler bzw. Druckbegrenzer 10 zu einem Druckluftkreis 11 und über einen Druckregler 12 zu einem Druckluftkreis 13, die jeweils die Bremsanlage des Fahrzeuges mit Druckluft speisen und durch parallel zu den Druckreglern 10 und 12 geschaltete Rückschlagventile 14 und 16 und eine Drosselstelle 15 bzw. 17 voneinander getrennt sind, wobei die Durchlaßrichtung der Rückschlagventile 14 und 16 von der Leitung 7 zu den Druckluftkreisen 11 bzw. 13 verläuft. Es handelt sich insoweit um die übliche Kreisabsicherung von Bremskreisen.

Die Druckluftkreise 11 und 13 sind je über ein Rückschlagventil 20 bzw. 21 zu einem gemeinsamen Druckbegrenzer 22 geführt, der wiederum über ein T-Stück und Druckregler 23 bzw. 25 zu Druckluftkreisen 24 bzw. 26 verläuft. Beispielsweise kann es sich hierbei um die Druckluftspeisung für den Anhänger eines Lkw handeln. In die Leitungen zwischen den Druckluftkreisen 11 bzw. 13 und die Rückschlagventile 20 bzw. 21 ist jeweils ein Druck/Spannungs-Wandler 18 bzw. 19 eingeschaltet, der den Druck in der entsprechenden Leitung mißt und ebenfalls an die elektronische Steuerung 31 meldet. Die elektrischen Signalleitungen von den Druckspannungswandlern 18 bzw. 19 zur elektronischen Steuerung 31 sind mit 18' bzw. 19' bezeichnet.

Die Ausgänge der Druckregler 23 und 25 führen einmal direkt zu den Druckluftkreisen 24 bzw. 26 und einmal über Rückschlagventile 27 bzw. 29 zu Druckluftanschlüssen 28 bzw. 30.

Wie schon eingangs angedeutet, geht es bei der Erfindung im wesentlichen darum, das Regenerieren des Lufttrockners 5 präziser zu steuern und nicht - wie beim Stand der Technik - in fest vorgegebenen Zeitintervallen mit einer fest vorgegebenen Luftmenge zu regenerieren. Bei der Erfindung wird im Ergebnis die Luftmenge, die den Lufttrockner 5 durchströmt hat, gemessen und daraus bestimmt, zu welchem Zeitpunkt und mit welcher Luftmenge der Lufttrockner 5 in Gegenrichtung durchströmt werden muß, um eine ausreichende Regeneration zu erhalten. Zu diesem Zwecke mißt primär der Druckspannungswandler 8 und sekundär auch noch der Druckspannungswandler 18 und 19 den Luftverbrauch (Luftmenge) und meldet diesen an die elektronische Steuerung 31. Im konkreten Falle werden Drucksensoren verwendet, die jeweils den aktuellen Druck an die elektronische Steuerung 31 melden. Aus den zeitlichen Änderungen des Druckes kann bei bekannten Querschnitten und Volumina der gesamten Anlage hieraus der Luftverbrauch, d.h. das Luftvolumen, das den Lufttrockner 5 durchströmt hat, ermittelt werden. Hieraus bestimmt die elektronische Steuerung den Zeitpunkt für die Regeneration sowie auch die für das Regenerieren erforderliche Luftmenge und gibt über eine elektrische Leitung 32' ein Signal an ein Magnetventil 32, dessen pneumatischer Eingang an die Druckluftleitung 7 zwischen dem Rückschlagventil 6 und dem Druckregler 9 angeschlossen ist. Dieses Magnetventil ist in der Ruhestellung abgesperrt. Wird es erregt, so öffnet es und verbindet seinen Eingang, d.h. die Druckluftleitung 7 mit einem Rückschlagventil 35, das in die Druckluftleitung zwischen dem Ausgang des Lufttrockners 5 und dem Eingang des Rückschlagventiles 6 angeschlossen ist. Die Reihenschaltung aus dem Magnetventil 32 und dem Rückschlagventil 35 liegt somit parallel zu dem Rückschlagventil 6 und überbrückt dieses in Gegenrichtung, so daß Druckluft aus dem Bremssystem von den Bremskreisen 11, 13, 24 und 26 den Lufttrockner 5 in Gegenrichtung durchströmen kann, womit dieser regeneriert wird.

Während des Regenerierens darf keine Druckluft von dem Kompressor 2 nachgespeist werden. Zu diesem Zwecke ist ein Entlüftungsventil 34 vorgesehen, das in Ruhestellung gesperrt und in aktivierter Stellung geöffnet ist. Der Einlaß des Entlüftungsventils 34 ist an den Eingang des Lufttrockners 5 angeschlossen. Sein pneumatischer Steuereingang ist an den Ausgang des Magnetventiles 32 angeschlossen. Sobald also das Magnetventil 32 erregt ist, gelangt auch Druckluft von der Druckleitung 7 zum Steuereingang des Ventiles 34, das dann die Verbindungsleitung zwischen dem Kompressor 2 und dem Lufttrockner 5 zur Atmosphäre hin entlüftet. Damit der Kompressor 2 während der Regenerationsphase keine Druckluft nachliefert, ist noch ein Doppelrückschlagventil 36 vorgesehen, dessen einer Eingang an den Ausgang des Magnetventiles 32 und dessen Ausgang an einen pneumatischen Steuereingang des Entlüftungsventiles 3 angeschlossen ist. Sobald am Ausgang des Magnetventiles 32 Druckluft anliegt, gelangt diese über das Doppelrückschlagventil 36 zum Steuereingang des Entlüftungsventiles 3, welches umschaltet und die Druckluftleitung vom Kompressor 2 mit Atmosphäre verbindet. Damit ist der normale Eingang des Lufttrockners 5 über das Entlüftungsventil 34 mit Atmosphäre verbunden und eine Nachspeisung von Druckluft aus dem Kompressor 2 unterbunden. Damit kann die Druckluft aus der Druckleitung 7 auf dem beschriebenen Wege in Gegenrichtung durch den Lufttrockner 5 strömen und diesen regenerieren. Der Druck/Spannungs-Wandler 8 überwacht während dieses Vorganges den Druckverlauf in der Druckleitung 7 und die elektronische Steuerung 31 ermittelt daraus die Menge der für das Regenerieren verwendeten Luft. Sobald die für das Regenerieren festgelegte Luftmenge durch den Lufttrockner 5 geströmt ist, schließt die elektronische Steuerung durch ein Signal auf der Leitung 32' das Magnetventil 32. Der Strömungsweg von der Druckleitung 7 über das Ventil 32 und das Rückschlagventil 35 zum Lufttrockner 5 wird abgesperrt. Ein eventueller Überdruck gegenüber Atmosphäre am Ausgang des Ventils 32 wird über das Rückschlagventil 35, den Lufttrockner 5 und das noch geöffnete Ventil 34 zur Atmosphäre abgebaut. Damit sinkt der Druck am Ausgang des Ventiles 32, womit auch der Steuerdruck an den Steuereingängen der Ventile 34 und 3 absinkt und diese Ventile in ihre Ruhestellung abfallen, d.h. das Ventil 34 wird abgesperrt und das Ventil 3 öffnet die Verbindung zwischen dem Kompressor 2 und dem Lufttrockner 5. Der Regenerationsvorgang ist damit beendet.

In manchen Fällen ist es wünschenswert, das Bremssystem zu entlüften, ohne eine Regenerations durchzuführen. Zu diesem Zweck wird von der elektronischen Steuerung 31 auf einer elektrischen Leitung 33' ein elektrisches Steuersignal ausgegeben, das ein Umschaltventil 33 aktiviert, das zwischen der Druckleitung 7 und einem zweiten Eingang des Doppelrückschlagventiles 36 liegt. In der Ruhestellung des Ventils 33 ist die Verbindung zwischen dessen Eingang und der Druckleitung 7 abgesperrt, während sein mit dem Doppelrückschlagventil 36 verbundener Eingang zur Atmosphäre hin entlüftet ist. Wird das Ventil 33 erregt, so wird die Leitung 7 mit dem Eingang des Doppelrückschlagventiles 36 verbunden, womit Druckluft von der Leitung 7 zum Steuereingang des Entlüftungsventiles 3 gelangt. Der Kompressor 2 speist dann keine Luft mehr in das System und der Druck wird konstant gehalten. Die Druck/Spannungs-Wandler 8, 18 und 19 überwachen den Druck im System und melden an die elektronische Steuerung 31, wenn der Druck abgefallen ist und der Kompressor 2 wieder Luft nachspeisen muß, worauf das Ventil 33 wieder in seiner in Fig. 1 dargestellten Ruhestellung umgesteuert wird. Dadurch wird die Steuerleitung zum Entlüftungsventil 3 drucklos; das Ventil 3 schaltet in die dargestellte Ruhestellung um und Druckluft kann wieder vom Kompressor nachgespeist werden.

Mit der Erfindung ist es daher möglich, das Regenerieren des Lufttrockners 5 in Abhängigkeit vom tatsächlichen Luftverbrauch zu steuern und auch die für das Regenerieren benötigte Luftmenge. Damit wird der Luftverbrauch insgesamt deutlich herabgesetzt. Weiter kann der Lufttrockner kleiner dimensioniert werden. Es wird auch im Gegensatz zum bisher bekannten Stand der Technik kein eigener Vorratsbehälter für Regenerationsluft benötigt. Auch die für das Regenerieren benötigte Luftmenge kann reduziert werden, da diese exakt auf das zum Regenerieren tatsächlich benötigte Volumen reduziert werden kann. Es muß auch nicht bei jedem Entlasten des Kompressors eine Regeneration durchgeführt werden. Damit erhält man eine verlängerte Lebensdauer der Lufttrockner- und -Filterpatrone. Die Anlage ist insgesamt kompakt und ohne bauliche Änderungen an verschiedene Fahrzeugtypen anpaßbar, und zwar allein durch entsprechende Programmierung der elektronischen Steuerung 31. Schließlich werden im Vergleich zum bekannten Stand der Technik auch Druckluftleitungen eingespart, so daß die Anordnungen nach der Erfindung wesentliche Kostenvorteile bringt.

Die elektronische Steuerung 31 kann hardwaremäßig in die Blockierschutzregelung (ABS-Funktion) oder ein elektronisches Bremssystem (EBS) integriert sein und deren Prozessor mitbenutzen. Es ist allerdings auch möglich, die elektronische Steuerung 31 eigenständig zu realisieren.

Als weiterer Vorteil ist noch zu nennen, daß das beim Stand der Technik übliche Mehrkreisschutzventil für die Kreisabsicherung und die Anordnung für die Lufttrocknung und Luftaufbereitung einschließlich Regeneration zu einer einzigen Baueinheit integriert sind.

## Patentansprüche

1. Luftaufbereitungsanordnung für Druckluft, insbesondere für pneumatische Bremsanlagen von Kraftfahrzeugen, mit einem Kompressor (2), einem daran angeschlossenen Lufttrockner (5), einem Entlüftungsventil (3), das den Kompressor (2) mit Atmosphäre verbindet, einem Magnetventil (32), das getrocknete Regenerationsluft durch den Lufttrockner (5) strömen läßt und mit einer an den Ausgang des Lufttrockners (5) angeschlossenen Druckleitung (7), einer Meßeinrichtung (8, 31), einer elektronischen Steuerung (31), die den Zeitpunkt des Regenerierens des Lufttrockners bestimmt und ein Steuersignal an das Magnetventil (32) abgibt, das in aktiviertem Zustand Regenerationsluft unmittelbar aus der Druckleitung (7) durch den Lufttrockner (5) leitet, wobei die Regenerationsluft in Gegenstomrichtung durch den Lufttrockner (5) geleitet wird, wobei
die Meßeinrichtung (8, 31) das vom Kompressor (2) durch den Lufttrockner (5) hindurch geförderte Luftvolumen ermittelt, und
die elektronische Steuerung (31) den Zeitpunkt des Regenerierens aus dem so ermittelten Luftvolumen bestimmt,
**dadurch gekennzeichnet,**
**daß** die elektronische Steuerung (31) das Volumen der zum Regenerieren benötigten Regenerationsluft bestimmt,
**daß** die Meßeinrichtung (8, 31) das durch den Lufttrockner hindurchgeflossene Regenerationsluftvolumen ermittelt und das Magnetventil (32) wieder deaktiviert, wenn das von der elektronischen Steuerung (31) ermittelte Regenerationsluftvolumen durch den Lufttrockner (5) geflossen ist und daß die Meßeinrichtung einen an die Druckleitung (7) angeschlossenen Druck/Spannungs-Wandler (8) aufweist, dessen elektrisches Ausgangssignal der elektronischen Steuerung (31) zuführbar ist und daß die elektronische Steuerung (31) aus dem zeitlichen Verlauf des Druckes in der Druckleitung (7) das vom Kompressor (2) durch den Lufttrockner (5) hindurch geförderte Luftvolumen und das beim Regenerieren von der Druckleitung (7) durch den Lufttrockner (5) in Gegenstromrichtung geflossene Regenerationsluftvolumen ermittelt.

2. Luftaufbereitungsanordnung nach Anspruch 1,
**dadurch gekennzeichnet,**
**daß** zwischen dem Ausgang des Lufttrockners (5) und der Druckluftieitung (7) ein in der Gegenstromrichtung sperrendes Rückschlagventil (6) und parallel dazu das Magnetventil (32) angeordnet sind.

3. Luftaufbereitungsanordnung nach einem der Ansprüche 1 oder 2,
**dadurch gekennzeichnet,**
**daß** an einen kompressorseitigen Eingang des Lufttrockners (5) ein Umschaltventil (34) angeschlossen ist, das in deaktiviertem Zustand abgesperrt ist und in aktiviertem Zustand den kompressorseitigen Eingang des Lufttrockners (5) mit Atmosphäre verbindet.

4. Luftaufbereitungsanordnung nach Anspruch 3,
**dadurch gekennzeichnet,**
**daß** das Umschaltventil (34) pneumatisch gesteuert ist, daß sein Steuereingang mit dem Ausgang des Magnetventils (32) verbunden ist, daß zwischen dem Ausgang des Lufttrockners (5) und dem Rückschlagventil (6) ein weiteres Rückschlagventil (35) angeordnet ist, das in der Gegenstromrichtung öffnet und daß der Ausgang des Magnetventils (32) mit einem Eingang eines Doppelrückschlagventiles (36) verbunden ist, dessen Ausgang mit einem Steuereingang des Entlüftungsventiles (3) verbunden ist.

5. Luftaufbereitungsanordnung nach Anspruch 2,
**dadurch gekennzeichnet,**
**daß** an die Druckluftleitung (7) ein weiteres, von der elektronischen Steuerung (31) angesteuertes Magnetventil (33) angeschlossen ist, dessen anderer Anschluß an den zweiten Anschluß des Doppelrückschlagventiles (36) angeschlossen ist, wobei dieses weitere Magnetventil (33) in deaktiviertem Zustand den zweiten Eingang des Doppelrückschlagventiles mit Atmosphäre und in aktiviertem Zustand mit der Druckleitung (7) verbindet.

## Claims

1. Pneumatic concentration system for processing compressed air, in particular for pneumatic brake systems in motor vehicles, comprising a compressor (2), an air drier (5) connected thereto, a vent valve (3) connecting said compressor (2) to the atmosphere, a solenoid-operated valve (32) enabling the flow of dried regeneration air through said air drier (5), and a compressed-air line (7) connected to the outlet of said air drier (5), a measuring means (8, 31), an electronic controller (31) determining the point of time of regeneration of said air drier and issuing a control signal to said solenoid-operated valve (32) which, in the activated state, passes regeneration air from said compressed-air line (7) directly through said air drier (5), with said regenerated air being passed in the reverse-flow direction through said air drier (5), wherein
said measuring means (8, 31) establishes the air volume delivered from said compressor (2) through said air drier (5), and
said electronic controller (31) determines the point of time of regeneration by derivation from the air volume so established,
**characterised in**
**that** said electronic controller (31) determines the volume of the regeneration air required for regeneration,
**that** said measuring means (8, 31) determines the volume of regeneration air, which has flown through said air drier, and deactivates said solenoid-operated valve (32) again when the volume of regeneration air determined by said electronic controller (31) has flown through said air drier (5), and
**that** said measuring means comprises a pressure/voltage converter (8) connected to said compressed-air line (7), whose electric output signal may be supplied to said electronic controller (31), and that said electronic controller determines, from the development of pressure in said compressed-air line (7) versus time, the air volume delivered from said compressor (2) through said air drier (5) and the volume of regeneration air which has flown from said compressed-air line (7) in the reverse-flow direction through said air drier (5) during regeneration.

2. Pneumatic concentration system according to Claim 1,
**characterised in**
**that** a check valve (6) s disposed between the outlet of said air drier (5) and said compressed-air line (7), which holds back in the reverse-flow direction, and said solenoid-operated valve (32) is disposed in parallel therewith.

3. Pneumatic concentration system according to any of the Claims 1 or 2,
**characterised in**
**that** a switching valve (34) is connected to an inlet of said air drier (5) on the compressor side, which is shut off in the deactivated state and which connects said inlet of said air drier (5) on the compressor side to the atmosphere in its activated state.

4. Pneumatic concentration system according to Claim 3,
**characterised in**
**that** said switching valve (34) is pneumatically controlled, that its control inlet is connected to the outlet of said solenoid-operated valve (32), that a further check valve (35) is disposed between the outlet of said air drier (5) and said check valve (6) and opens in the reverse-flow direction, and that the outlet of said solenoid-operated valve (32) is connected to an inlet of a dual check valve (36) whose outlet is connected to a control inlet of said vent valve (3).

5. Pneumatic concentration system according to Claim 2,
**characterised in**
**that** a further solenoid-operated valve (33), which is controlled by said electronic controller (31), is connected to said compressed-air line (7) and has another connector connected to the second connector of said dual check valve (36), with said further solenoid-operated valve (33) connects said second inlet of said dual check valve to the atmosphere in its deactivated state and connects this inlet to said compressed-air line (7) in its activated state.

## Revendications

1. Système de traitement d'air comprimé, en particulier pour des systèmes de freinage pneumatique de véhicules automobiles, comportant un compresseur (2), un sécheur (5) d'air raccordé à celui-ci, une soupape (3) d'évacuation d'air qui relie le compresseur (2) à l'atmosphère, une électrovanne (32) qui fait passer de l'air de régénération sec dans le sécheur (5) d'air, et comportant une conduite (7) de pression raccordée à la sortie du sécheur (5) d'air, un dispositif (8, 31) de mesure, une commande (31) électronique, qui détermine l'instant de la régénération du sécheur d'air et délivre un signal de commande à l'électrovanne (32) qui, lorsqu'elle est activée, dirige l'air de régénération directement depuis la conduite (7) de pression dans le sécheur (5) d'air,
l'air de régénération étant dirigé à contre-courant dans le sécheur (5) d'air, le dispositif (8, 31) de mesure déterminant le volume d'air refoulé par le compresseur (2) dans le sécheur (5) d'air, et
la commande (31) électronique déterminant l'instant de la régénération à partir du volume d'air ainsi déterminé,
**caractérisé en ce que** la commande (31) électronique détermine le volume d'air de régénération nécessaire à la régération,
le dispositif (8, 31) de mesure détermine le volume d'air de régénération qui est passé dans le sécheur d'air, et désactive à nouveau l'électrovanne (32) lorsque le volume d'air de régénération déterminé par la commande (31) électronique est passé dans le sécheur (5) d'air, et
le dispositif de mesure comporte un convertisseur (8) de pression en tension, raccordé à la conduite (7) de pression et dont le signal de sortie électrique peut être apporté à la commande (31) électronique, et **en ce que** la commande (31) électronique détermine, à partir de la courbe dans le temps de la pression dans la conduite (7) de pression, le volume d'air refoulé par le compresseur (2) dans le sécheur (5) d'air, et détermine le volume d'air de régénération qui, lors de la régénération, passe à contre-courant depuis la conduite (7) de pression dans le sécheur (5) d'air.

2. Système de traitement d'air suivant la revendication 1, **caractérisé en ce qu'**une soupape (6) de non retour, fermant la direction de contre-courant, et, en parallèle avec elle, l'électrovanne (32) sont disposées entre la sortie du sécheur (5) d'air et la conduite (7) d'air comprimé.

3. Système de traitement d'air suivant l'une des revendications 1 ou 2, **caractérisé en ce qu'**une soupape (34) d'inversion est raccordée à une entrée côté compresseur du sécheur (5) d'air, soupape qui est fermée lorsqu'elle est désactivée et qui, lorsqu'elle est activée, relie à l'atmosphère l'entrée côté compresseur du sécheur (5) d'air.

4. Système de traitement d'air suivant la revendication 3, **caractérisé en ce que** la soupape (34) d'inversion est commandée pneumatiquement, **en ce que** son entrée de commande est reliée à la sortie de l'électrovanne (32), **en ce qu'**une autre soupape (35) de non retour, qui s'ouvre dans la direction de contre-courant, est disposée entre la sortie du sécheur (5) d'air et la soupape (6) de non retour, et **en ce que** la sortie de l'électrovanne (32) est reliée à une entrée d'une soupape (36) double de non retour, dont la sortie est reliée à une entrée de commande de la soupape (3) d'évacuation d'air.

5. Système de traitement d'air suivant la revendication 2, **caractérisé en ce qu'**une autre électrovanne (33), asservie par la commande (31) électronique, est raccordée à la conduite (7) d'air comprimé, électrovanne dont l'autre branchement est raccordé au deuxième branchement de la soupape (36) double de non retour, cette autre électrovanne (33) reliant la deuxième entrée de la soupape double de non retour à l'atmosphère lorsqu'elle est désactivée, et à la conduite (7) de pression lorsqu'elle est activée.
